# EUROPEAN PATENT APPLICATION

(11) **EP 1 087 317 A2**
(43) Date of publication of application: **28.03.2001**
(21) Application number: 00308271.6
(22) Date of filing: 21.09.2000
(51) Int. Cl.: G06F 17/60

(54) **Method and system for reserving transportation services on-line**

(30) Priority: 23.09.1999 US 404021
(71) Applicant: BerthaDrive.Com, Inc., New York, New York 10018 (US)
(72) Inventor: Ziobinsky, Llya, Baldwin Harbor 11510, New York (US); Gregory, Davidzon, Brooklyn 11235, New York (US); Danilov, Ivan, Brooklyn 11204, New York (US)
(74) Representative: Midgley, Jonathan Lee

(57) **Abstract**

A method and system for matching supply and demand for transportation services receives information from a customer concerning the departure location, destination and estimated time of departure desired by a customer seeking to reserve a vehicle for transportation services. Information is also received from suppliers of transportation services concerning the availability of a vehicle to meet the customer requests and desired remuneration. The customer can accept the price and confirm placement of an order for the transportation services. In a preferred form of the present invention, the system determines whether a vehicle is available in the area of the departure location, and if a vehicle is not available, the system will determine whether any vehicle is within a selected time for travel to the departure area. Also, the vehicles utilizing the system may be equipped with means to position a vehicle through a global position system. The system may be used to match car services with those seeking to travel to a destination, freight handlers with truckers, or van or car pool services.

## Description

The present invention provides a method and system using online computer systems for interactively matching customers with providers of transportation services.

The use of computer online systems for matching buyers and sellers of products and services is becoming increasingly popular, and the present invention relates to a system to enable computers to be used for matching purchasers and providers of transportation services interactively online. Typically, a customer who desires to reserve a vehicle for transportation must contact a particular provider to make a reservation and obtain a price quote. Unfortunately, however, unless the provider of the services has a vehicle in the vicinity of the departure location at the time of departure, the provider must dispatch a vehicle to the departure location.

Also, if the destination is remote from any pickup presently scheduled by the provider; the vehicle must often return without any customers to an area where another customer can be serviced. Consequently, such providers as car or limousine services, or trucking companies, often have a vehicle traveling to another job without a paying customer.

Fares or freight charges, therefore, must be adjusted to compensate the provider for those periods when the vehicle will be traveling without any paying customer. In order to reduce travel of vehicles without a paying customer, the present invention uses computers to match customers seeking transportation services with providers having vehicles scheduled to be in the departure area at the time of departure. In this way, the travel time often necessitated for providers of transportation services can be reduced to enable the providers to reduce fares to the benefit of both providers of such services and their anticipated customers.

According to the present invention, a method and system are provided for use with online computer systems to match customers and providers of transportation services interactively. Customer information concerning the departure location, destination and estimated time of departure desired by a customer for transportation services is entered by the customer, and information from suppliers concerning the availability of a vehicle to meet the requests of the customer information are also entered into the system. Based on the information provided by the customer, the supplier can quote a price to meet the requirements of the customer, and the customer can accept the offered price and confirm placement of an order for the transportation services. A supplier would provide information to determine whether a vehicle is available in the area of the departure location at the appropriate time, and, if not, to determine whether any vehicle is within a selected time to travel to the departure area. Additionally, the vehicles may be equipped with transponders which will serve to position a vehicle within a global positioning system so that information concerning the location of a vehicle can be entered automatically into the system.

These and other object, advantages and features of the present invention would become apparent from the detailed description given below which is made in conjunction with the following drawing figures:

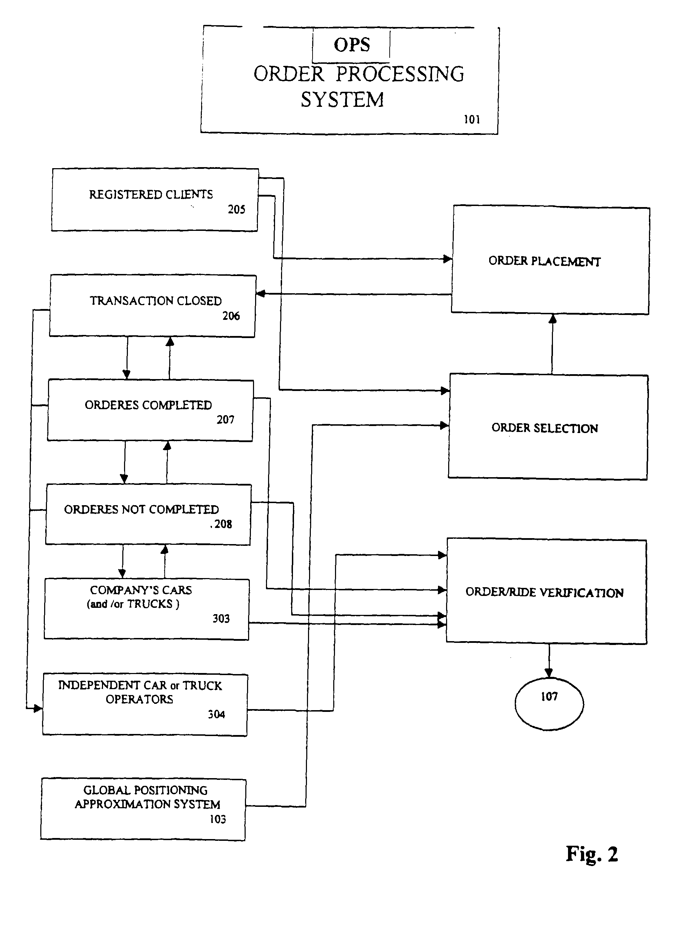

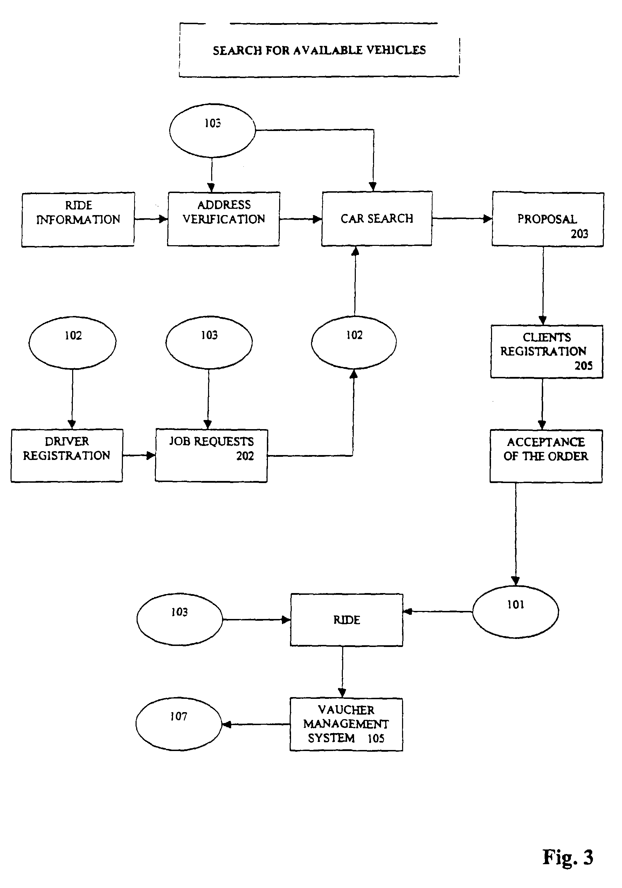

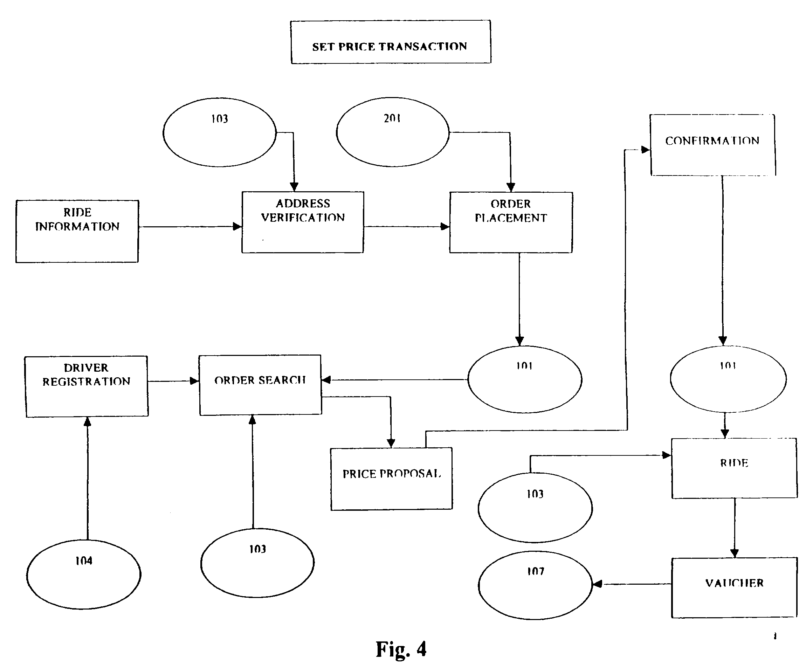

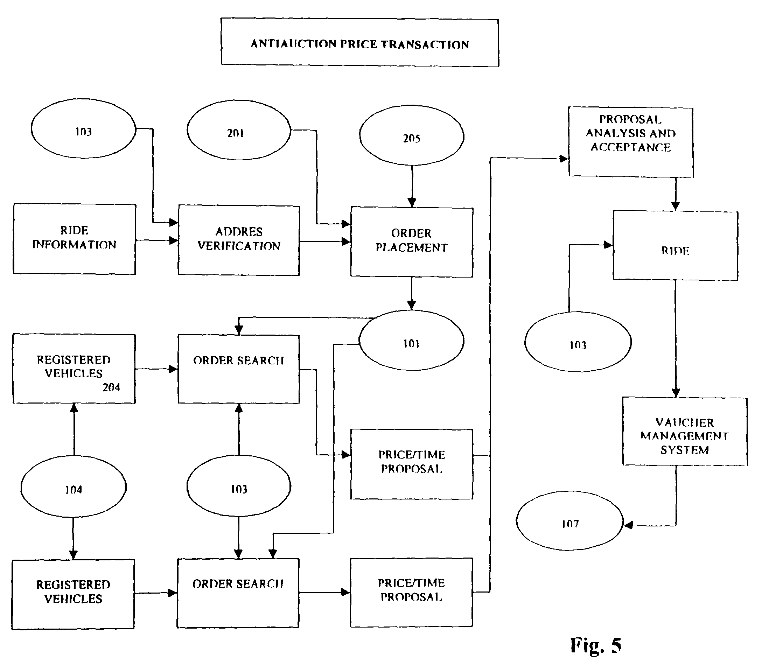

Figs. 1 through 5 schematically illustrates the overall order processing system (OPS) of the present invention;
Figs. 6 through 12 illustrate a flow chart for the software for the operating system as utilized by a customer seeking transportation services;
Fig. 13 illustrates schematically an order processing system utilizing the present invention for car or van pools or public transportation system;
Figs. 14 and 15 illustrate a flow chart for the software for the operating system as utilized by a provided for transportation services.

The present invention is intended to be utilized in a system bearing the trademark CLICKARIDE.COM; and the system is intended to be available online through the computer network commonly referred to as the internet.

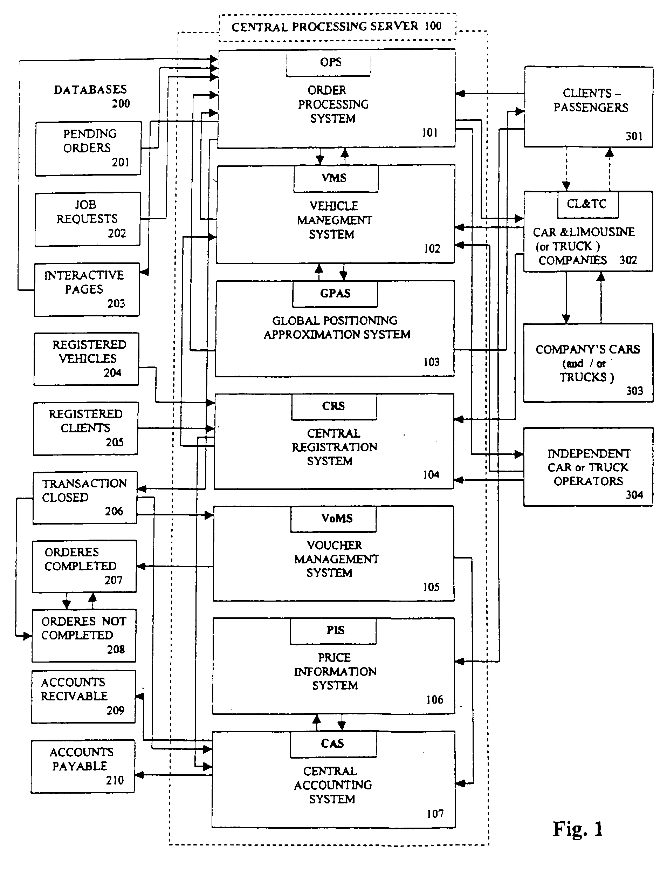

Fig. 1 illustrates schematically the overall server operation for a system according to the present invention. The central processing server 100 includes an order processing system (OPS) 101 receiving information from the various databases 200. The OPS receives information from the vehicle management system (VMS) 102 receiving information interactively from transportation providers 302 which may be car or limousine services or trucking companies, or independent providers 304. Additionally, the VMS may receive information from a global positioning approximation system (GPAS) 103 as a result of transponders carried by vehicles registered within central registration system (CRS) 104.

The system further includes a central accounting system (CAS) 107 receiving information as shown from the data bases and voucher management system (VMS) 105 and the price information system (PIS) 106.

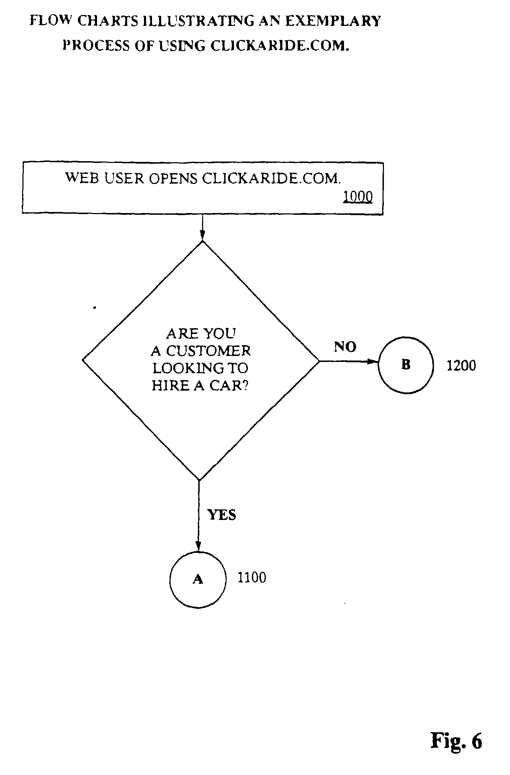

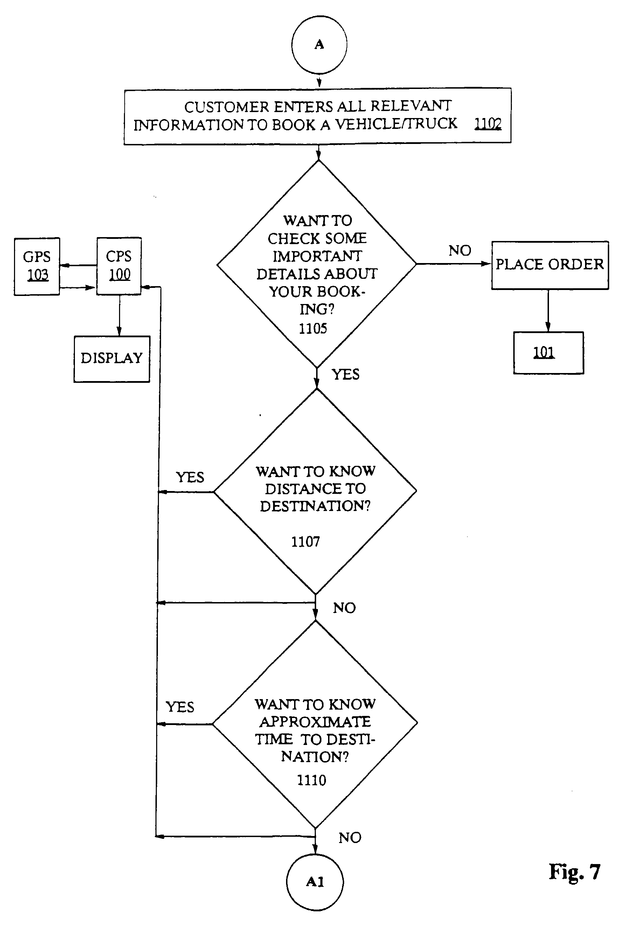

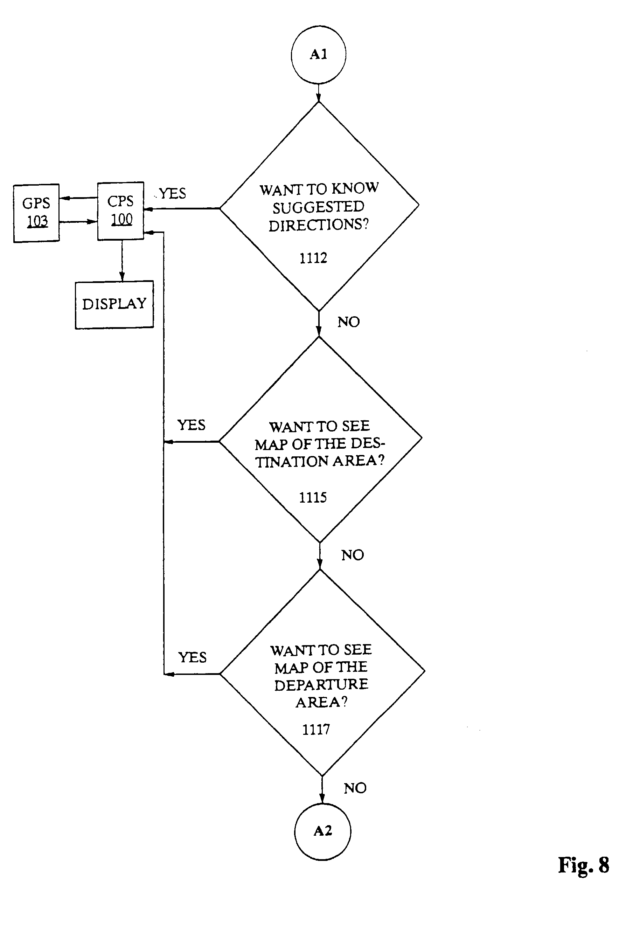

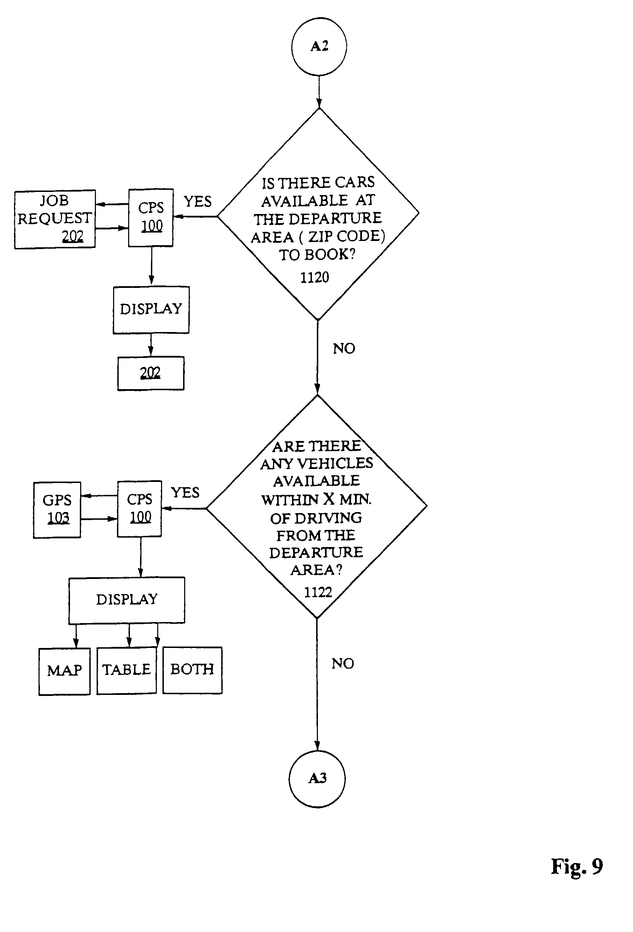

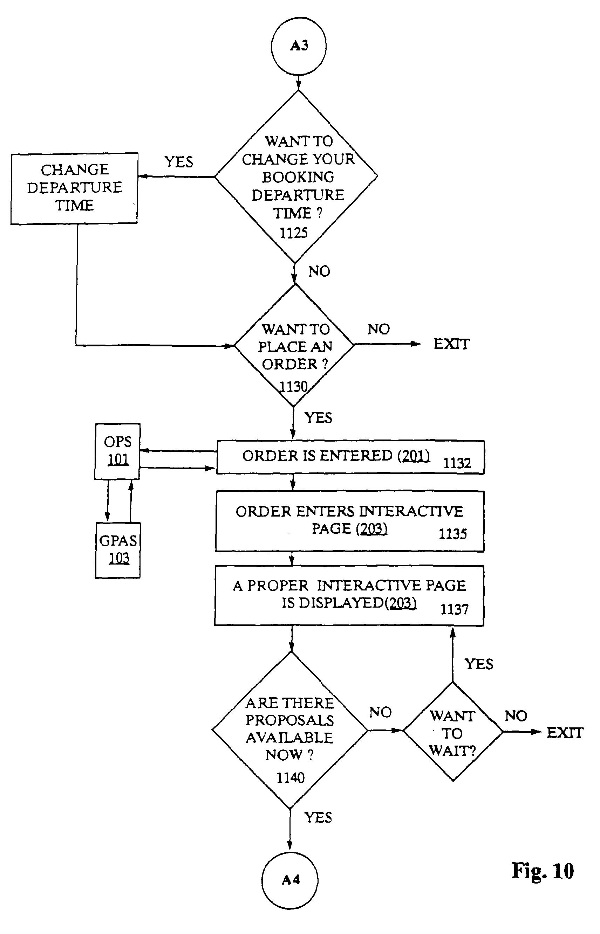

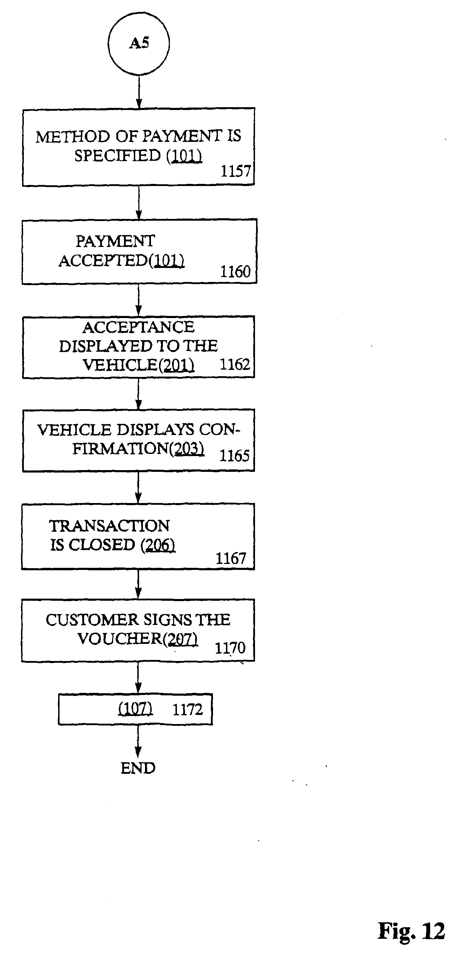

Figs. 6 through 12 illustrate the system of the present invention utilized to enable a customer to be matched interactively with a car or limousine service, or a trucking service. As illustrated in Fig. 6, a customer can access the system as represented in block 1000; and if seeking to hire a vehicle, the customer will be requested as represented by block 1102 to enter information concerning the departure location, destination and estimated time of departure desired for a particular trip.

The customer may thereafter review the information provided as represented in block 1105; and the system will provide options as noted in blocks 1107 and 1110 enabling the customer to determine information concerning the distance to the destination or approximate travel time. Additionally, further information concerning the anticipate trip may be obtained as shown in decision blocks 1112, 1115, and 1117 concerning any suggested directions, a map of the destination area or map of the departure area.

As noted in block 1120, the system will determine whether or not the databank obtained from information supplied by car services or other providers of transportation services establishes whether vehicles are scheduled to be available in the departure area at the time of expected departure. Preferably, the departure area is determined by the zip code of the departure location. In the event there are vehicles available in the departure area for the departure time, the information is provided to the customer to continue with the job request and confirmation which would be noted below.

An important feature of the present invention is to provide assistance to the customer in the event there are no vehicles scheduled to be within the departure area at the departure time. In such event, the system will determined whether there are vehicles which can arrive in the departure area within a certain time of the anticipated time of departure. Such time can be selected by the customer; and in the event there is a vehicle available within the time period selected by the customer, the information would be displayed to explain the availability of a vehicle to meet the customer demands.

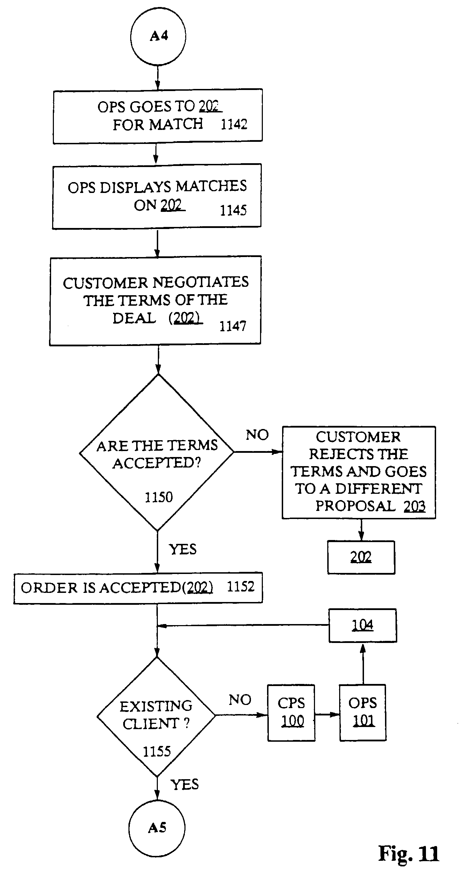

The system will then inquire in decision blocks 1125 and 1130 to decide whether the customer wants to confirm and place an order; and once the decision to place an order is communicated to the system by the customer, the interactive portion of the system will become active to display to the customer whether there are any proposals presently made to the customer from a service willing to provide the transportation services requested. In decision block 1140, any matches for the requests of the customer in the databank of provider information are displayed and the price provided to the customer for either acceptance or rejection as noted in Fig. 11.

In the event there are no presently available proposals, the system will enable the customer to exit or wait a period of time to determine if proposals can be generated in the time period selected by the customer.

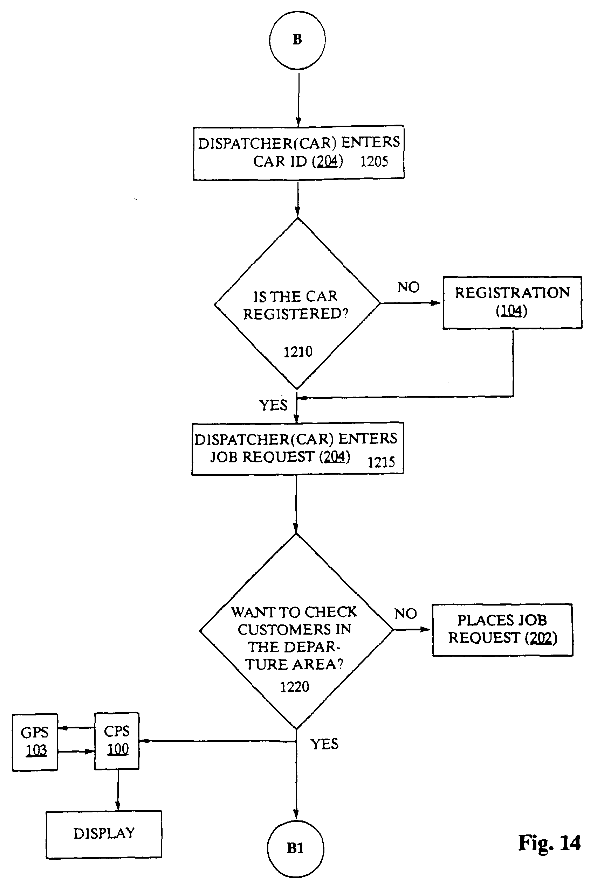

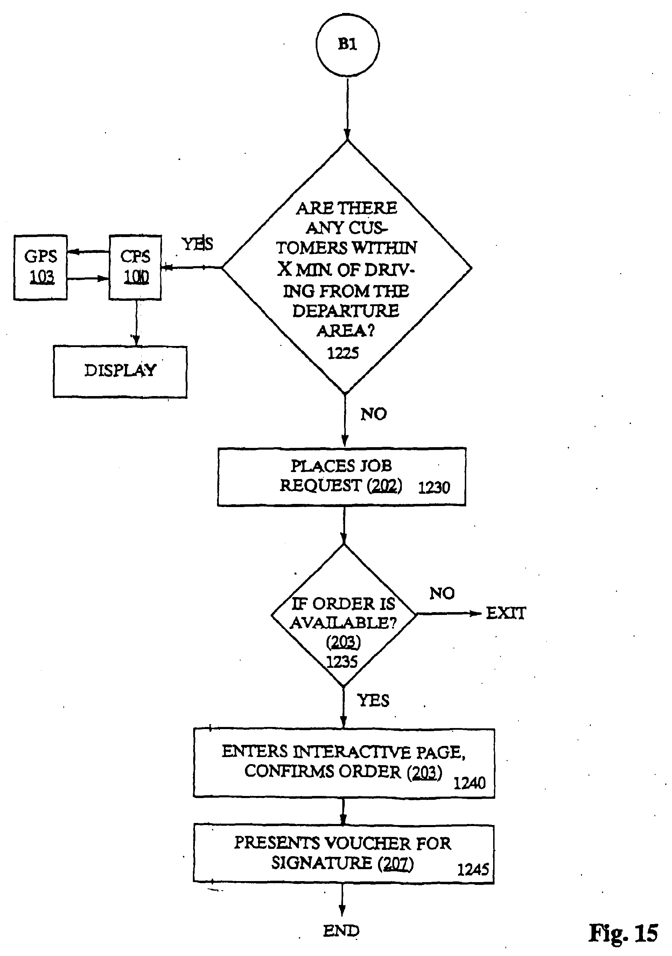

Fig. 14 illustrates a flow chart for use of the system by providers of transportation services, and as can be noted the dispatcher from the service enters the identification of the car as noted in block 1205, and if the car is registered within the system, the dispatcher enters information concerning jobs that would be available according to the present driving plans of the vehicle. As can be understood from the flow charts of Figs. 14 and 15, the system will match information provided by suppliers of transportation services with available jobs; and if a match is attained, a customer can be provided with information concerning the appropriate cost to select the service.

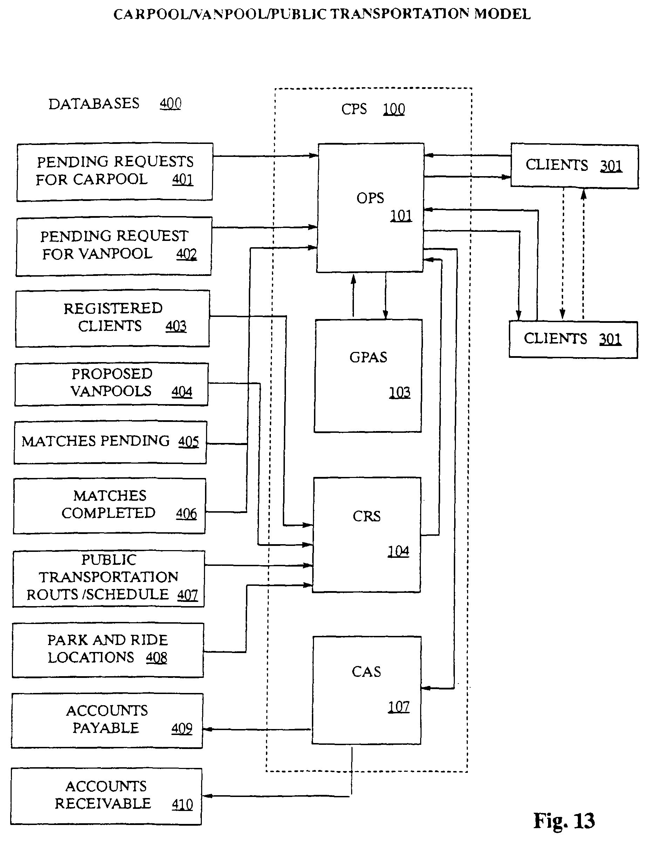

Fig. 13 illustrates the overall system of the present invention as modified for use in a car or van pool to match users. Although the specific data inputted into the system will vary as shown in Fig. 13, the basic operating principles remain the same as would be well understood in the art.

These and other objects, advantages and features of the present invention will be understood from a detailed description of preferred embodiments described above in conjunction with the accompanying drawings. The invention, however, is not limited by the above; but by the appended claims.

## Claims

1. In an online system for matching providers of transportation services with customers, including means for receiving customer information concerning the departure location, destination and estimated time of departure desired by customers seeking transportation services, means for receiving from suppliers of transportation services supplier information concerning the availability of a vehicle to meet the requests of the customer information, means for the supplier to provide a price to meet the requests of a supplier of customer information, and means for a customer to accept the price and confirm placement of an order for transportation services.

2. In an online system for receiving transportation services as set forth in claim 1, said means for receiving supplier information including means to determine whether a vehicle is available in the area of the departure location and, if not, to determine whether any vehicles are within a selected time to travel to said departure area.

3. In an online system for reserving transportation services as set forth in claim 1, said vehicle being equipped with means to position the vehicle within a global positioning system.

4. In a method for use with online computer systems for matching providers of transportation services with customers, including the step of receiving customer information concerning the departure location, destination and estimated time of departure desired by a customer for a trip, the step of receiving from suppliers of transportation services information concerning the availability of a vehicle to meet the requests of customer information, the step of said supplier providing a price to meet the requests of the customer information, and the step of the customer to accept the price and confirm placement of an order for transportation services.

5. In a method as set forth in claim 4, further including the step of receiving information from the supplier to determine whether a vehicle is available in the area of the departure location and, if not, determining whether any vehicles are within a selected time to travel to said departure area.

6. In a method as set forth in claim 4, the step of locating vehicles participating in the system in a global positioning system.
